# FASCICULE DE BREVET EUROPEEN

(11) **EP 2 401 317 B1**
(45) Date de publication et mention de la délivrance du brevet: **01.04.2015**
(21) Numéro de dépôt: 10707256.3
(22) Date de dépôt: 26.02.2010
(51) Int. Cl.: C08G 63/08

(54) **PROCÉDÉ DE PRODUCTION DE STÉRÉOCOMPLEXES PLLA/PDLA**
VERFAHREN ZUR HERSTELLUNG VON PLLA/PDLA-STEREOKOMPLEXEN
METHOD FOR PRODUCING PLLA/PDLA STEREOCOMPLEXES

(30) Priorité: 27.02.2009 BE 200900122
(43) Date de publication de la demande: 04.01.2012
(73) Titulaire: Futerro S.A., 7760 Escanaffles (BE)
(72) Inventeur: LHOST, Olivier, B-7021 Havré (BE); NAVEZ, Pascal, B-6140 Fontaine l'Evêque (BE); BRUSSON, Jean-Michel, B-1410 Waterloo (BE)
(74) Mandataire: Leyder, Francis
(86) Numéro de dépôt international: PCT/EP2010/052490
(87) Numéro de publication internationale: WO 2010/097463

(56) Documents cités:
- WO-A1-2008/096895
- WO-A1-2008/120821
- DATABASE WPI Week 200922 Thomson Scientific, London, GB; AN 2009-F36943 XP002546264 & JP 2009 040997 A (TORAY IND INC) 26 février 2009 (2009-02-26)

## Description

### DOMAINE TECHNIQUE DE L'INVENTION

La présente invention se rapporte à un procédé sans solvant et en continu de production d'un polymère stéréocomplexe PLLA/PDLA de masse moléculaire en nombre supérieure à 15 000 Dalton et de préférence supérieure à 70 000 Dalton et ayant des propriétés de pureté améliorée.

### ARRIERE PLAN TECHNOLOGIQUE DE L'INVENTION

Il est bien connu que l'acide poly-L-lactique (PLLA) et l'acide poly-D-lactique (PDLA), les deux énantiomères du poly(acide lactique) (PLA), présentent la particularité de pouvoir former un stéréocomplexe. Ces stéréocomplexes peuvent être obtenus en mélangeant deux solutions, l'une contenant du PLLA, l'autre du PDLA, dans un solvant tel le CH₂Cl₂ ou solvants analogues et en versant ce mélange dans un excès de méthanol ce qui provoque la précipitation du stéréocomplexe. Si on considère les propriétés physiques du stéréocomplexe formé, la température de fusion est voisine de 230°C soit de l'ordre de 50°C au-dessus de la température de fusion de chacun des énantiomères pris isolément.

Dans la littérature, on décrit souvent l'obtention, non d'un stéréocomplexe pur mais d'un mélange du stéréocomplexe avec du PLLA et du PDLA pur ce qui est moins intéressant. La difficulté d'obtenir uniquement le stéréocomplexe est renseignée dans la littérature comme étant d'autant plus importante qu'on réalise le mélange de PLLA et de PDLA en absence de solvant et que le PLLA et le PDLA de départ sont caractérisés par de faible masse moléculaire. Pour des masses moléculaires supérieures à 10 000 Dalton (Macromolecules 39, 3710 (2006)) et en l'absence de solvant, l'état de la technique est très clair : l'obtention de stéréocomplexe sans qu'il y ait coexistence avec des cristallites homochirales n'est pas décrite à l'heure actuelle.

Or il s'avère que l'on s'oriente de plus en plus vers l'utilisation d'énantiomère de masse moléculaire plus élevée, différentes propriétés, telles les propriétés mécaniques des fibres produites au départ de ces stéréocomplexes, étant clairement meilleures lorsque la masse moléculaire est élevée. Il existe donc un besoin d'être capable de produire des stéréocomplexes PLLA/PDLA, sans présence obligatoire conjointe de cristallites homochirales et ce avec un procédé, (i) n'utilisant pas de solvant, mais (ii) surtout qui utilise au départ, des énantiomères de masse moléculaire en nombre supérieure à 15 000 Dalton et de préférence supérieure à 70 000 Dalton.

Selon l'enseignement du brevet EP1780234, on a déjà essayé d'obtenir ce type de stéréocomplexe contenant un faible quantité de cristallites homochirales, mais en partant d'énantiomères de configuration L ou D, dans lesquels une certaine quantité de séquence D ou L, respectivement, a été introduite afin d'améliorer la compatibilité entre les énantiomères de départ et d'éviter ainsi la trop grande formation de cristallites homochirales. Cependant, le manque de pureté optique, induit par la présence de séquence D dans le PLLA et de séquence L dans le PDLA, se traduira nécessairement par un manque de cristallinité dans les produits finaux formés au départ de ceux-ci. Ceci explique pourquoi les températures de fusion renseignées dans le brevet EP1780234 sont significativement inférieures à 230°C pour le stéréocomplexe formé.

On a également tenté d'obtenir des stéréocomplexes sans solvant dans le brevet WO 2008/057214 A2. Cependant, ici aussi, le problème de pureté n'est pas résolu puisque la température de fusion du stéréocomplexe ne dépasse pas 215°C.

L'abstract Derwent du document JP-A-2009040997 divulgue un procédé de production d'un polymère stéréocomplexe 50/50 PLLA/PDLA comprenant :
1. la polymérisation d'acide lactique L par polycondensation à 180°C à 13Pa pendant 5 heures en présence d'acétate d'étain pour faire du PLLA,
2. la polymérisation d'acide lactique D par polycondensation à 180°C à 13Pa pendant 5 heures en présence d'acétate d'étain pour faire du PDLA,
3. le mélange du PLLA et PDLA (50/50) en extrudeuse à 220°C,
4. l'introduction du mélange dans un séchoir sous vide et réaction à 150 et 170°C respectivement pendant 10 heures et à 190°C pendant 20 heures.

EP2130871 se réfère à des compositions à base d'acide polylactique ayant des propriétés d'injection-moulage améliorées et aux dits articles obtenus.

La présente invention a donc pour objet un procédé sans solvant pour produire des stéréocomplexes PLLA/PDLA exempts de cristallites homochirales, et ce, au départ d'énantiomères de masse moléculaire en nombre élevée, supérieure à 70 000 Dalton, et qui ne contiennent pas ou très peu d'insertion de l'autre configuration que la leur sur la chaîne polymérique du fait de la pureté de L-Lactide et du D-Lactide de départ.

La présente invention a donc pour objet un procédé pour produire un polymère stéréocomplexe PLLA/PDLA dans une proportion comprise entre 40/60 et 60/40 mais de préférence entre 45/55 et 55/45 et, encore mieux, proche de 50/50 qui est la composition vraiment préférée, qui soit pur et suffisamment cristallin soit pour être utilisé seul dans des applications telles que « textile » ou des applications « durables » comme l'électronique et l'automobile où l'on a besoin de tenue thermique supérieure à celle apportée par le PLLA actuellement disponible sur le marché, soit pour jouer le rôle d'agent nucléant dans du PLLA ou du PDLA.

Un autre objet de l'invention est de mettre au point un procédé pour produire le stéréocomplexe qui ne fasse pas intervenir de solvant et qui permette de ne pas isoler les PLLA et PDLA nécessaire à la formation du stéréocomplexe.

L'intérêt de l'invention présentée est que la production de stéréocomplexe PLLA/PDLA de masse moléculaire en nombre élevée (supérieure à 15 000 Dalton et de préférence supérieure à 70 000 Dalton) est possible selon le procédé de l'invention présenté dans ce brevet, et ce, sans qu'il soit nécessaire d'utiliser un quelconque solvant et sans qu'il soit impérativement nécessaire d'isoler les polymères intermédiaires que sont le PLLA et le PDLA.

Le procédé de production sans solvant pour produire un polymère stéréocomplexe PLLA/PDLA comprend les étapes suivantes :
- Polymériser en masse le L-L lactide de pureté optique d'au moins 98 %, de préférence d'au moins 99,5 %, encore plus préférentiellement d'au moins 99,8 % pour former le PLLA substantiellement exempt d'insertion de lactide de configuration D ayant une masse moléculaire moyenne en nombre (Mn) supérieure à 70.000 Dalton;
- Polymériser en masse le D-D lactide de pureté optique d'au moins 98 %, de préférence d'au moins 99,5 %, encore plus préférentiellement d'au moins 99,8 % pour former le PDLA substantiellement exempt d'insertion de lactide de configuration L ayant une masse moléculaire moyenne en nombre (Mn) supérieure à 70.000 Dalton;
- Mélanger, en l'absence de solvant, du PLLA et du PDLA obtenus aux étapes précédentes en présence du système catalytique actif initial et, optionnellement, en présence du L-Lactide et du D-Lactide non converti, à une température supérieure à la température de fusion du polylactide et de préférence supérieure à 225°C mais ne dépassant pas 250°C et préférentiellement ne dépassant pas 245°C;
- Démonomériser, si nécessaire, le polymère ainsi obtenu;
- Granuler le stéréocomplexe PLLA/PDLA de masse molaire en nombre supérieure à 15 000 Dalton et de préférence supérieure à 70 000 Dalton.

Après l'étape de mélange du PLLA et du PDLA, un agent de désactivation du système catalytique peut être introduit afin d'éviter les réactions secondaires ayant un effet néfaste sur la masse moléculaire du produit final lors des transformations ultérieures;

Toutes les étapes, décrites ci-dessus peuvent être réalisées de façon successive sans aucune interruption et de la sorte, disposer d'un procédé continu.

La mise en évidence de la formation d'un stéréocomplexe est réalisée par analyse DSC (Differential Scanning Calorimetry). Lors de cette analyse, un pic de fusion de température supérieure à celle des énantiomères de départ doit être détecté. La pureté du stéréocomplexe doit être très élevée. Par pureté, on entend l'absence de pics de fusion correspondant aux énantiomères de départ purs. Si, lors du premier chauffage de l'analyse DSC, un pic de fusion correspondant à ces énantiomères coexistait encore avec le pic de fusion du stéréocomplexe, ce pic va disparaître progressivement au cours des étapes de cristallisation - fusion ultérieures réalisées dans l'équipement DSC, preuve que l'aptitude à former le stéréocomplexe est améliorée lorsqu'on utilise l'approche décrite dans l'invention.

### DESCRIPTION DÉTAILLÉE DE L'INVENTION

La présente invention concerne l'obtention, séparément, de l'acide polylactique de configuration L et D par les deux premières étapes du procédé de la présente invention et leur mélange pour former le stéréocomplexe. Toutes ces opérations sont réalisées en masse et peuvent être réalisées de manières successives.

### Polymérisation du L-L lactide et du D-D lactide

La demanderesse a maintenant trouvé que si l'on effectue la synthèse du stéréocomplexe PLLA/PDLA par mélange en l'absence de solvant selon les conditions du procédé de la présente invention, un stéréocomplexe très pur (exempt ou pratiquement exempt de PLLA pur et de PDLA pur) est obtenu. D'autre part, le procédé d'obtention du stéréocomplexe de l'invention est particulièrement bien applicable à une exploitation industrielle. En effet, il permet une obtention rapide du stéréocomplexe et permet une exploitation directe du polymère contrairement au procédé en solution à la suite duquel le polymère obtenu doit être séparé du solvant, ce qui d'une part augmente la complexité du procédé et d'autre part affecte sa rentabilité économique.

Le terme « acide polylactique » est équivalent au terme « acide polylactide ».

Le terme « acide poly-L-lactique » (PLLA) ou « acide poly-L-lactide », tel qu'utilisé dans l'invention, se réfère à un polymère isotactique de formule générale (I) dans laquelle n est tel que la masse moléculaire moyenne en nombre est supérieure à 15 000 Dalton:

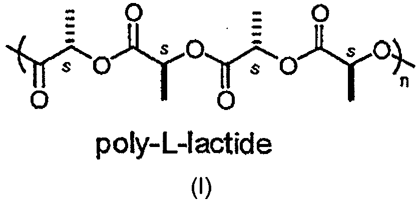

En général, à l'heure actuelle, des masses moléculaires moyennes en nombre comprises entre 15 000 et 200 000 Dalton peuvent être obtenues avec le procédé de l'invention.

Le terme « acide poly-D-lactique » (PDLA) ou « acide poly-D-lactide », tel qu'utilisé dans l'invention, se réfère à l'énantiomère du PLLA.

Le (S,S) lactide ou L-lactide sera aussi renseigné L-L lactide pour bien insister sur le fait qu'il correspond au dimère de deux molécules du même énantiomère d'acide lactique. De même, par la suite, le (R,R) lactide ou D-lactide sera aussi renseigné D-D lactide.

Dans le procédé de la présente invention, il est souhaitable d'utiliser du lactide de configuration stéréochimique D-D ou L-L ayant une pureté optique aussi appelée pureté isomérique en L ou D d'au moins 98 % en poids, de préférence 99,5% en poids. Une pureté isomérique d'au moins 99,8% en poids est vraiment préférée.

De préférence, le L-L lactide utilisé dans le procédé comprend une teneur en D-D lactide inférieure à 0.5 % et le D-D lactide utilisé dans le procédé comprend une teneur en L-L lactide inférieure à 0.5 %. De manière plus préférentielle, le L-L lactide utilisé dans le procédé comprend une teneur en D-D lactide inférieure à 0.2 % et le D-D lactide utilisé dans le procédé comprend une teneur en L-L lactide inférieure à 0.2 %.

De préférence, la pureté chimique du lactide de départ est telle que l'acidité résiduelle est inférieure à 20 méq/kg et l'eau résiduelle est inférieure ou égale à 100 ppm, plus préférablement inférieure ou égale à 50 ppm.

Le terme « temps de réaction ou temps de séjour » de la réaction de polymérisation tel qu'utilisé dans l'invention se réfère au laps de temps pendant lequel l'acide poly-L-lactique ou l'acide poly-D-lactique est présent dans un réacteur ou une cascade de réacteurs, dans l'extrudeuse ou tout autre équipement de polymérisation pouvant fonctionner en mode batch ou continu, avec ou sans agitateur.

Selon un mode de réalisation préféré de l'invention, ledit procédé de préparation de l'acide polylactique peut être effectué à une température comprise entre 170 et 200°C, préférentiellement à une température comprise entre 170 et 195°C, plus préférentiellement à une température comprise entre 175 et 185°C, encore plus préférentiellement à une température comprise entre 175 et 180°C. Toute configuration du réacteur pouvant favoriser le contrôle de la température comme par exemple un ratio surface d'échange/volume réactionnel ou tout autre système connu de l'homme de l'art sera préféré dans le cadre de l'invention.

Selon un autre mode de réalisation préféré de l'invention, ledit procédé de préparation de l'acide polylactique peut être effectué pendant un temps de réaction compris entre 5 et 75 minutes, préférentiellement entre 10 et 60 minutes, plus préférentiellement entre 10 et 45 minutes, encore plus préférentiellement entre 15 et 30 minutes.

Selon un autre mode de réalisation préféré de l'invention, ledit procédé de préparation de l'acide polylactique peut être effectué conjointement à une température comprise entre 170 et 195°C et pendant un temps de réaction compris entre 10 et 75 minutes, préférentiellement à une température comprise entre 170 et 185°C et un temps de réaction compris entre 15 et 30 minutes, préférentiellement à une température comprise entre 170 et 180°C et un temps de réaction compris entre 15 et 25 minutes.

Selon un mode de réalisation préféré de l'invention, ledit procédé de préparation de l'acide polylactique peut être effectué en présence d'un gaz inerte. Le gaz inerte peut être choisi parmi le groupe comportant l'azote, l'argon, néon, krypton, xénon, hélium. Préférentiellement, le gaz inerte peut être l'azote ou l'argon, plus préférentiellement, le gaz inerte peut être l'azote. Le gaz inerte peut contenir entre 0 et 100 ppm d'H₂O, préférentiellement entre 0 et 50 ppm d'H₂O, plus préférentiellement entre 0 et 10 ppm d'H₂O. Préférentiellement, ledit gaz inerte peut avoir une teneur en H₂O inférieure ou égale à 5 ppm.

Selon un autre mode de réalisation préféré de l'invention, ladite mise en contact de lactide avec le système catalytique et ladite réaction de polymérisation peuvent être effectuées sous pression atmosphérique et en présence ou pas d'un gaz inerte.

Selon un autre mode de réalisation préféré de l'invention, ladite mise en contact de lactide avec le système catalytique et ladite réaction de polymérisation en masse peuvent être effectuées sous dépression et en présence ou pas d'un gaz inerte.

Ledit procédé peut être effectué en mode batch ou en continu dans un réacteur ou une cascade de réacteurs de polymérisation munis optionnellement d'un ou plusieurs agitateurs haute viscosité ou par extrusion dans une extrudeuse (ou réacteur horizontal) à simple, double ou multiple vis. De préférence le procédé est en continu. De préférence le procédé est effectué en réacteur avec optionnellement un agitateur haute viscosité.

Ledit procédé de polymérisation peut être effectué en dépression, en surpression ou à pression atmosphérique. En particulier, lorsque la polymérisation se fait dans un réacteur muni d'un agitateur haute viscosité, le procédé peut être effectué sous dépression, surpression ou balayage d'azote, de préférence sous surpression d'un gaz inerte.

Selon un autre mode de réalisation particulier, on effectue la polymérisation par extrusion dans une extrudeuse. Dans ce cas, le procédé peut être effectué sous balayage d'un gaz inerte.

Selon le procédé de l'invention, on conduit la polymérisation du lactide jusqu'à un taux de conversion compris entre 80% et la limite thermodynamique, de préférence elle est supérieure à 90%.

Le procédé de la présente invention est effectué en présence d'au moins un système catalytique. Ledit système catalytique comprend au moins un catalyseur et optionnellement au moins un cocatalyseur.

De préférence le catalyseur est de formule (M) (X¹, X²....X^{m})ₙ dans laquelle
- M est un métal sélectionné parmi le groupe comportant les éléments des colonnes 3 à 12 du tableau périodique ainsi que les éléments Al, Ga, In, TI, Ge, Sn, Pb, Sb, Ca, Mg et Bi,
- X¹, X²,....X^{m} est un substituant sélectionné parmi le groupe comportant C₁-C₂₀ alkyle, C₆-₃₀ aryle, aryloxy, oxyde, carboxylate, halogénure, C₁-C₂₀ alcoxy et des composés contenant des éléments du groupe 15 et/ou 16 du tableau périodique,
- m est un nombre entier compris entre 1 et 6, et
- n est un nombre entier compris entre 1 et 6.

Au sens de la présente invention, on entend par « alkyle » un groupe hydrocarboné linéaire ou ramifié, saturé, de 1 à 20 atomes de carbone, en particulier de 1 à 16 atomes de carbone, en particulier de 1 à 12 atomes de carbone, en particulier de 1 à 10 atomes et plus particulièrement de 1 à 6 atomes de carbone. A titre d'exemple, sont inclus dans cette définition des radicaux tels que méthyle, éthyle, isopropyle, n-butyle, t-butyle, n-propyle, pentyle, n- hexyle, 2-éthylbutyle, heptyle, octyle, nonyle, ou décyle.

Au sens de la présente invention, on entend par « aryle », un cycle aromatique comprenant de 1 à 3 noyaux aromatiques, éventuellement fusionnés, de 6 à 20 atomes de carbone, notamment de 6 à 10 atomes de carbone. A titre d'exemple de groupes aryle convenant à la mise en oeuvre de l'invention il est possible de mentionner le phényle, le phenéthyle, le naphtyle ou le anthryle.

Au sens de la présente invention, on entend par « alcoxy » un groupe de formule générale R-O- où R est un groupe alkyle tel que définit ci-dessus. On peut citer, à titre d'exemple, les groupes méthoxy, éthoxy, propoxy, t-butoxy, n-butoxy, isobutoxy, sec-butoxy, n-pentoxy, isopentoxy, sec-pentoxy, t-pentoxy, hexyloxy, isopropoxy.

On entend par « halogénure » un chlorure, un fluorure, un iodure ou un bromure.

De préférence, le co-catalyseur est de formule générale (Y)(R¹, R² ... R^{q})ₛ dans laquelle
- Y est un élément sélectionné parmi les éléments du groupe 15 et/ou 16 du tableau périodique,
- R¹, R² ... R^{q} est un substituant sélectionné parmi le groupe comportant C₁-C₂₀ alkyle, C₆-C₂₀ aryle, oxyde, halogénure, alcoxy, aminoalkyle, thioalkyle, phényloxy, aminoaryle, thioaryle, et des composés contenant les éléments du groupe 15 et/ou 16 du tableau périodique.
- q est un nombre entier compris enter 1 et 6, et
- s est un nombre entier compris entre 1 et 6.

On entend par « aminoalkyle » un groupe alkyle portant un groupement -NR^{a}₂ sur sa chaîne carbonée où R^{a} est un alkyle, un aryle ou un hydrogène.

On entend par « thioalkyle » un groupe alkyle portant un groupement R^{b}S- où R^{b} est un alkyle, un aryle ou un hydrogène.

On entend par « aminoaryle » un groupe aryle comportant un motif -NR^{c}₂ où R^{c} est un aryle, un alkyle ou un hydrogène.

On entend par « thioaryle » un groupe aryle comportant un motif R^{d}S- où R^{d} est un aryle, un alkyle ou un hydrogène.

Préférentiellement, le système catalytique comprend le bis(2-éthylhexanoate) d'étain (Sn(Oct)₂) comme catalyseur et la triphénylphosphine (PPh₃) comme co-catalyseur. Ce système catalytique est connu et décrit par exemple dans le document US 6,166,169. Le rapport molaire entre le co-catalyseur et le catalyseur peut être compris entre 1/10 et 10/1, préférentiellement entre 1/3 et 3/1. Plus préférentiellement, le rapport molaire entre le co-catalyseur et le catalyseur peut être 1/1.

Le rapport molaire entre le lactide et le catalyseur peut être compris entre 100/1 et 10.000/1, préférentiellement entre 1.000/1 et 7.500/1, plus préférentiellement entre 1.500/1 et 6.000/1.

Le procédé de la présente invention comprend aussi l'utilisation d'un agent d'initiation. L'agent d'initiation peut être l'eau résiduelle contenue dans le lactide, un alcool ou une amine. L'alcool ou l'amine peut être aliphatique ou aromatique de formule générale R¹⁰-(A)ₛ dans laquelle A est OH ou NH2 et s est 1 ou 2, R¹⁰ est un radical alkyle comportant de 1 à 20 atomes de carbone ou un radical aryle comportant de 6 à 30 atomes de carbone. De préférence, R¹⁰ est un radical alkyle comportant de 3 à 12 atomes de carbone ou un radical aryle comportant de 6 à 10 atomes de carbone.

Parmi les alcools, on peut citer l'isopropanol, le 1,4-butanediol, l'octanol-1 et le dodécanol.

Parmi les amines, on peut citer l'isopropylamine et la 1,6-hexanediamine.

Selon un mode de réalisation préféré de l'invention, le rapport molaire entre le lactide et l'initiateur lorsque ce dernier est un alcool ou une amine peut être compris entre 50/1 et 1.000/1, préférentiellement entre 100/1 et 750/1, plus préférentiellement entre 200/1 et 600/1. Lorsque l'initiateur est l'eau résiduelle présente dans le lactide, le rapport molaire entre le lactide et l'eau peut être compris dans les mêmes gammes que celles mentionnées lorsque l'initiateur est un alcool ou une amine.

De préférence, l'initiateur est un alcool ou une amine.

L'acide polylactique de configuration L ou D susceptible d'être obtenu par cette première partie du procédé de l'invention a une masse moléculaire moyenne en nombre (Mn) supérieure à 70 000 Dalton, lorsqu'elle est mesurée par chromatographie par perméation de gel par rapport à un standard polystyrène dans le chloroforme à 30°C. Le rapport entre la masse moléculaire moyenne en poids (Mw) et la masse moléculaire moyenne en nombre (Mn) est généralement comprise entre 1,2 et 2,8.

### Formation du stéréocomplexe

Les polymères PLLA et PDLA obtenus selon la description ci-avant sont ensuite mélangés en masse. Ce mélange est réalisé en mode batch ou en continu dans un réacteur ou une cascade de réacteurs de polymérisation munis optionnellement d'un ou plusieurs agitateurs haute viscosité ou par extrusion dans une extrudeuse (ou réacteur horizontal) à simple, double ou multiple vis. De préférence le procédé est en continu.

Ledit procédé de mélange du PLLA et du PDLA, réalisé en présence du système catalytique initial résiduel, peut être effectué en surpression ou à pression atmosphérique. En particulier, lorsque le mélange se fait dans un réacteur muni d'un agitateur haute viscosité, le procédé peut être effectué sous surpression ou balayage d'azote, de préférence sous surpression d'un gaz inerte. Ledit procédé de mélange du PLLA et du PDLA est réalisé de façon préférentielle juste après leur fabrication.

Selon un autre mode de réalisation particulier, on effectue le mélange du PLLA et du PDLA par extrusion dans une extrudeuse.

Selon un mode de réalisation préféré de l'invention, ledit procédé de préparation de mélange du PLLA et du PDLA, réalisé en présence du système catalytique initial résiduel, peut être effectué en présence d'un gaz inerte. Le gaz inerte peut être choisi parmi le groupe comportant l'azote, l'argon, néon, krypton, xénon, hélium. Préférentiellement, le gaz inerte peut être l'azote ou l'argon, plus préférentiellement, le gaz inerte peut être l'azote. Le gaz inerte peut contenir entre 0 et 100 ppm d'H₂O, préférentiellement entre 0 et 50 ppm d'H₂O, plus préférentiellement entre 0 et 10 ppm d'H₂O. Préférentiellement, ledit gaz inerte peut avoir une teneur en H₂O inférieure ou égale à 5 ppm.

Les polymères PLLA et PDLA sont mélangés dans un rapport (en poids) qui peut varier entre 60/40 et 40/60 mais de préférence entre 45/55 et 55/45 et, encore mieux, proche de 50/50 qui est la composition vraiment préférée. Plus la proportion s'écarte de 50/50, plus on risque d'observer, lors de l'analyse DSC, une proportion importante de PLLA ou de PDLA pur en combinaison avec le stéréocomplexe. Si on s'écarte de manière significative d'un mélange 50/50, par exemple en réalisant un mélange 70/30 ou 75/25, on obtient un mélange de stéréocomplexe en présence du composé majoritaire (PLLA ou PDLA) ce qui nuit à la pureté.

Le mélange de PLLA et de PDLA est réalisé à une température supérieure à la température de fusion du PLLA et du PDLA. La température de mélange préférée, du fait de la pureté du PLLA et du PDLA de départ, est supérieure à 210°C, de préférence supérieure à 225°C et inférieure 250°C. La température préférée est de 240°C. Si la température est inférieure à 215°C, il y a un risque de blocage de l'agitation du réacteur de mélange et ce d'autant plus que la pureté optique des PLLA et PDLA de départ est très élevée; si la température est supérieure à 250°C, il y a un risque de dégradation des polymères.

Le mélange dans le réacteur doit être réalisé pendant une période comprise entre 15 secondes et 20 minutes, de préférence entre 1 et 5 minutes. Si le temps de mélange est trop court, il y a un risque que le stéréocomplexe n'ait pas le temps de bien se former; si le temps de séjour est trop long, il y a un risque de dégradation du PLLA et du PDLA.

A la fin de cette étape de mélange, un agent de désactivation du système catalytique peut être introduit afin d'éviter des réactions secondaires ayant un effet néfaste sur la masse moléculaire du produit final lors de l'étape de démonomérisation du lactide non converti. Les agents de désactivation comprennent les acides carboxyliques et de façon préférentielle les acides polyacryliques ; les hydrazides encombrés avec des substituants phénoliques, aryles et akyles ; les amides d'acide mono ou di carboxyliques aliphatiques ou aromatiques ; amides cycliques, hydrazones et bishydrazones d'aldéhydes aliphatiques et aromatiques, hydrazides d'acide mono ou di carboxyliques aliphatiques ou aromatiques, dérivés d'hydrazine diacylée, composés phosphites et composés hétérocycliques. Pour être conforme à l'invention, il est très important que cette étape de désactivation du catalyseur n'ait pas été réalisée avant l'étape de mélange du PLLA et du PDLA.

A la suite de cette étape, une étape optionnelle de démonomérisation est conduite afin d'enlever le monomère résiduel suivant les procédures bien connues dans le cadre de la synthèse des PLLA et des PDLA. Cette étape de démonomérisation est conduite dans la mesure où elle n'a pas été réalisée précédemment sur le PLLA et le PDLA.

En sortie du réacteur, on récupère un polymère correspondant à un stéréocomplexe de PLLA et de PDLA de masse molaire Mₙ supérieure à 15 000 Dalton et de préférence supérieure à 70 000 Dalton et pouvant être même être supérieure à 90 000 Dalton. Il est recommandé de stocker le polymère à l'abri de l'humidité.

La mise en évidence de la formation d'un stéréocomplexe peut être réalisée par analyse DSC. Lors de cette analyse, un pic de fusion de température supérieure à celle des énantiomères de départ doit être détecté. La pureté du stéréocomplexe doit être très élevée. Lors de l'analyse DSC, la pureté du stéréocomplexe est caractérisée, d'une part, par une température de fusion supérieure à 215°C et préférentiellement supérieure à 220°C et d'autre part, par l'absence de pics de fusion correspondant aux énantiomères de départ purs. Si, lors du premier chauffage de l'analyse DSC, un pic de fusion correspondant à ces énantiomères coexistait avec le pic de fusion du stéréocomplexe, ce pic doit s'atténuer progressivement et préférentiellement disparaître au cours des étapes de cristallisation - fusion ultérieures réalisées dans l'appareil DSC.

La Demanderesse a maintenant trouvé qu'en appliquant le procédé de l'invention on pouvait obtenir un polymère stéréocomplexe de masse moléculaire moyenne en nombre supérieure à 15 000 Dalton et de préférence supérieure à 70 000 Dalton, caractérisé par une pureté supérieure à celle décrite avec les procédé usuels en masse.

De plus, le stéréocomplexe, ayant une masse molaire élevée, peut avantageusement être utilisé pour la production de fibres, de films, applications pour lesquelles il est connu que des masses moléculaires élevées permettent d'obtenir de meilleures propriétés.

La présente invention permet également d'obtenir des polymères stéréocomplexes ayant une vitesse de cristallisation plus rapide que celle des composés PLLA et PDLA de départ.

Le stéréocomplexe peut également être utilisé en mélange avec d'autres polymères. Le mélange de ce stéréocomplexe dans du PLLA ou du PDLA induit une accélération de la vitesse de cristallisation du PLA, le stéréocomplexe jouant le rôle de nucléant.

On a aussi constaté, qu'en utilisant un procédé de polymérisation en masse continu, pour obtenir les polylactides de configuration L ou D, et ce sans éliminer le lactide résiduel et en ne désactivant pas le catalyseur avant l'étape de mélange du PLLA avec le PDLA, on pouvait obtenir le produit de l'invention. Et ceci est contraire aux enseignements antérieurs.

Dans les exemples qui suivent, la mesure des masses moléculaires est réalisée à 30°C en utilisant un chromatographe liquide WATERS 610 : on prépare d'abord une solution de polymère dans le chloroforme de concentration 1 mg polymère/ml. 100 µl de cette solution sont prélevés et injectés, au travers d'un filtre dont les pores ont 0.2 µm de diamètre, sur la colonne du chromatographe à 30°C. Les masses moléculaires sont déterminées sur base du temps de rétention dans la colonne, d'un étalonnage réalisé avec des échantillons de polystyrène et d'une courbe de calibration universelle.

Les mesures DSC sont réalisées sur un appareil Perkin Elmer Pyris 1. Un essai consiste à introduire de 5 à 10 mg de polymère dans une capsule en aluminium scellée et à lui faire subir une succession d'étape de chauffage et de refroidissement donnée qui sera précisée à chaque fois.

Le procédé de la présente invention est illustré au moyen des exemples suivants, mais qui n'en constituent pas pour autant une limitation.

### EXEMPLES

### Exemple 1 (conforme à l'invention).

### 1.A. Préparation du PLLA

Le L,L-lactide est prélevé en boîte à gants et placé dans une ampoule à polymériser préalablement conditionnée à la flamme. Le L,L-lactide est ensuite fondu à 120°C avant introduction du catalyseur (mélange équimolaire de bis(2-éthylhexanoate) d'étain, identifié ci-après Sn(Oct)₂ + triphénylphosphine) en solution dans le toluène sec (concentration 0.037 mole/l) et de l'amorceur, le n-butanol séché sur tamis moléculaire. A noter que la triphénylphosphine a été recristallisée et séchée par distillation azéotropique au toluène. L'ampoule est ensuite scellée sous vide. La réaction de polymérisation est alors réalisée dans une étuve ventilée à 180°C pendant 45 minutes. Le PLA ainsi synthétisé est récupéré, solubilisé dans le chloroforme et reprécipité dans le méthanol froid afin d'éliminer le monomère résiduel.

Conditions de l'essai :
- rapport molaire lactide introduit/étain = 5000
- rapport molaire lactide introduit/butanol = 350

Rendement de l'essai (évalué par gravimétrie) : 91 %

Les masses moléculaires mesurées par GPC (Gel Permeation Chromatography) sont : Mₙ = 90 000 Dalton; ; M_{w} / Mₙ = 2.3. Une caractérisation du polymère a aussi été réalisée par DSC. L'histoire thermique imposée est : maintien de l'échantillon à 20°C pendant 4 minutes; chauffage de 20°C jusqu'à 220°C à 20°C/min; maintien de la température à 220°C pendant 4 min; refroidissement à -20°C/min de 220°C jusqu'à -20°C; maintien de l'échantillon à -20°C pendant 3 minutes et chauffage de -20°C jusqu'à 220°C à 20°C/min.

Lors du deuxième chauffage, la température de fusion mesurée est de 177.5°C.

### 1.B. Préparation du PDLA

La polymérisation décrite au point 1.A. a été répétée avec du D,D lactide au lieu du L-L, lactide.

Les masses moléculaires mesurées par GPC sont : Mₙ = 64 000 Dalton; ; M_{w} / Mₙ = 2. Une caractérisation du polymère a aussi été réalisée par DSC en utilisant la même histoire thermique que celle mentionnée dans la partie 1.A.

Lors du deuxième chauffage, la température de fusion mesurée est supérieure à 180.0°C.

### 1.C. Préparation du stéréocomplexe

Le PLLA en poudre produit à l'étape 1.A a été introduit dans un "Mini-max Molder" (modèle CS-183 MMX de CSI, Custom Scientific Instruments Inc) et chauffé à 190°C. Après deux minutes, le PLLA a été sorti de l'appareil sous forme de jonc.

Un jonc de PDLA a été produit de la même manière au départ de la poudre produite à l'étape 1.B.

2.5 g de PLLA et 2.5 g de PDLA ont ensuite été introduits dans une minextrudeuse Haake Minilab équipée d'une double vis co-rotative. La température de la mini-extrudeuse est programmée à 240°C; la vitesse de rotation des vis est de 20 rpm. Une recirculation au sein de la miniextrudeuse a été imposée durant 6 minutes. A la sortie de l'extrudeuse, le jonc sort, est refroidi par l'air ambiant du laboratoire, récupéré et stocké dans un dessiccateur pour éviter toute hydrolyse.

Les masses moléculaires mesures par GPC sont : Mₙ = 95 000 Dalton; M_{w} / Mₙ = 1.9

Une caractérisation du polymère a été réalisée par DSC. L'histoire thermique imposée est : maintien de l'échantillon à 20°C pendant 4 minutes; chauffage de 20°C jusqu'à 260°C à 20°C/min; maintien de la température à 260°C pendant 4 min; refroidissement à -20°C/min de 260°C jusqu'à -20°C; maintien de l'échantillon à -20°C pendant 3 minutes et chauffage de -20°C jusqu'à 260°C à 20°C/min. Lors de cette analyse, si on ne considère le signal DSC au-dessus de 140°C, deux pics de fusion sont apparus lors du premier chauffage (l'un à 177.8°C, l'autre de 224.2°C). Cette dernière température, étant plus élevée que celle des PLLA et PDLA pur, est interprétée comme la preuve de la formation d'un stéréocomplexe. D'autre part, cette température de 224.2°C est caractéristique de haut degré de pureté des PLLA et PDLA utilisés pour réaliser la stérécomplexation.

Lors du deuxième chauffage, il subsiste encore deux pics, l'un à 167.0°C, l'autre à 213.9°C. Mais clairement, le pic à 167.0°C est très petit et, si on le compare au pic à 177.8°C relevé au premier chauffage, on peut conclure que la quantité de PLLA et de PDLA purs a diminué entre les deux étapes de chauffage.

### Exemple 2 (conforme à l'invention).

### 2.A. Préparation du PLLA

Le L-L lactide d'une pureté supérieure à 99 % est prélevé en boîte à gants et placé dans une ampoule à polymériser préalablement conditionnée à la flamme. Le L,L-lactide est ensuite fondu à 120°C avant introduction du catalyseur (mélange équimolaire de Sn(Oct)₂ + triphénylphosphine) en solution dans le toluène sec (concentration 0.037 mole/l) et de l'amorceur, le n-butanol séché sur tamis moléculaire. A noter que la triphénylphosphine a été recristallisée et séchée par distillation azéotropique au toluène. L'ampoule est ensuite scellée sous vide. La réaction de polymérisation est alors réalisée dans une étuve ventilée à 180°C pendant 45 minutes. Le PLA ainsi synthétisé est récupéré, solubilisé dans le chloroforme et reprécipité dans le méthanol froid afin d'éliminer le monomère résiduel.

Conditions de l'essai :
- rapport molaire lactide introduit/étain = 5000
- rapport molaire lactide introduit/butanol = 350

Rendement de l'essai (évalué par gravimétrie) : 91 %

La masse moléculaire mesurée par GPC est : Mₙ = 193 000 Dalton. Une caractérisation du polymère a aussi été réalisée par DSC. L'histoire thermique imposée est : maintien de l'échantillon à 20°C pendant 4 minutes; chauffage de 20°C jusqu'à 200°C à 20°C/min; maintien de la température à 200°C pendant 4 min; refroidissement à -20°C/min de 200°C jusqu'à -20°C; maintien de l'échantillon à -20°C pendant 3 minutes et chauffage de -20°C jusqu'à 200°C à 20°C/min.

Lors du deuxième chauffage, la température de fusion mesurée est de 179.0°C.

### 2.B. Préparation du PDLA

La polymérisation décrite au point 2.A. a été répétée avec du D,D lactide d'une pureté supérieure à 99 % au lieu du L-L, lactide.

La masse moléculaire mesurée par GPC est : Mₙ = 163 000 Dalton. Une caractérisation du polymère a aussi été réalisée par DSC en utilisant la même histoire thermique que celle mentionnée dans la partie 2.A. Lors du deuxième chauffage, la température de fusion mesurée est de 180.4°C attestant d'une très bonne pureté.

### 2.C. Préparation du stéréocomplexe

Le PLLA en poudre produit à l'étape 2.A a été introduit dans un "Mini-max Molder" (modèle CS-183 MMX de CSI) et chauffé à 190°C. Après deux minutes, le PLLA a été sorti de l'appareil sous forme de jonc.

Un jonc de PDLA a été produit de la même manière au départ de la poudre produite à l'étape 2.B.

2.5 g de PLLA et 2.5 g de PDLA ont ensuite été introduits dans une minextrudeuse Haake Minilab équipée d'une double vis co-rotative. La température de la mini-extrudeuse est programmée à 205°C; la vitesse de rotation des vis est de 30 rpm. Aucune recirculation au sein de la mini-extrudeuse n'a été autorisée. A la sortie de l'extrudeuse, le jonc sort, est refroidi par l'air ambiant du laboratoire, récupéré et stocké dans un dessiccateur pour éviter toute hydrolyse.

Une caractérisation du polymère a été réalisée par DSC. L'histoire thermique imposée est : maintien de l'échantillon à 20°C pendant 4 minutes; chauffage de 20°C jusqu'à 260°C à 20°C/min; maintien de la température à 260°C pendant 4 min; refroidissement à -20°C/min de 260°C jusqu'à -20°C; maintien de l'échantillon à -20°C pendant 3 minutes et chauffage de -20°C jusqu'à 260°C à 20°C/min. Lors de cette analyse, si on ne considère le signal DSC au-dessus de 140°C, deux pics de fusion sont apparus lors du premier chauffage (l'un aux alentours de 176.1°C, l'autre de 227.5°C).

### 2.D. Test de l'effet nucléant éventuel du stéréocomplexe de haute pureté.

0.5 g du stéréocomplexe formé à l'étape 2.C. et 4.5 g d'un PLLA commercialement disponible (Mn = 95 000 Dalton, Mw/Mn = 1.65, température de fusion lors d'une chauffe à 20°C/min = 170.3°C) ont été introduits dans une mini-extrudeuse Haake Minilab équipée d'une double vis co-rotative. La température de la mini-extrudeuse est programmée à 230°C; la vitesse de rotation des vis est de 40 rpm. Une recirculation du polymère est imposée à l'intérieur de la mini-extrudeuse pendant 5 minutes. Par la suite, le mélange sort de l'extrudeuse sous forme de jonc, est refroidi par l'air ambiant du laboratoire, récupéré et stocké dans un dessiccateur pour éviter toute hydrolyse.

Une analyse DSC a été réalisée avec ce mélange. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à - 20°C/min de 240°C jusqu'à -20°C; maintien de l'échantillon à -20°C pendant 3 minutes et chauffage de -20°C jusqu'à 240°C à 20°C/min. Lors de cette analyse, un pic de fusion à haute température (220.5°C lors du premier chauffage, 215°C lors du second chauffage) atteste de la présence effective d'un stéréocomplexe très pur dans le mélange. Lors du refroidissement de l'échantillon, deux phénomènes endothermiques sont observés (180.0°C et proche de 100°C) avant d'atteindre la transition vitreuse lors du refroidissement de l'échantillon ce qui illustre bien l'effet nucléant de ce stéréocomplexe de haute pureté.

### Exemple 3 (non conforme à l'invention en terme de pureté optique du PDLA).

### 3.A. Préparation du PLLA

La synthèse décrite au point 2.A. a été reproduite. Le L-L lactide utilisé est caractérisé par une pureté optique supérieure à 98 %.

Les masses moléculaires mesures par GPC sont : Mₙ = 105 000 Dalton; M_{w} / Mₙ = 1.63. Une caractérisation du polymère a aussi été réalisée par DSC. L'histoire thermique imposée est : maintien de l'échantillon à 20°C pendant 4 minutes; chauffage de 20°C jusqu'à 200°C à 20°C/min; maintien de la température à 200°C pendant 4 min; refroidissement à -20°C/min de 200°C jusqu'à -20°C; maintien de l'échantillon à -20°C pendant 3 minutes et chauffage de -20°C jusqu'à 200°C à 20°C/min.

Lors du deuxième chauffage, la température de fusion mesurée est de 174.6°C.

### 3.B. Préparation du PDLA

La polymérisation décrite au point 3.A. a été répétée avec du D,D lactide au lieu du L-L, lactide. Dans ce cas, la pureté de D,D lactide est de 88.5 %

Les masses moléculaires mesurées par GPC sont : Mₙ = 67 000 Dalton; ; M_{w} / Mₙ = 1.27. Une caractérisation du polymère a aussi été réalisée par DSC en utilisant la même histoire thermique que celle mentionnée dans la partie 3.A.

Lors du premier chauffage, la température de fusion mesurée est de 141.7°C; aucun pic n'est détecté lors de la deuxième fusion, confirme le faible degré de pureté du D,D-lactide utilisé comme point de départ de la polymérisation.

### 3.C. Préparation du stéréocomplexe

Le PLLA en poudre produit à l'étape 3.A a été introduit dans un "Mini-max Molder" (modèle CS-183 MMX de CSI) et chauffé à 190°C. Après deux minutes, le PLLA a été sorti de l'appareil sous forme de jonc.

Un jonc de PDLA a été produit de la même manière au départ de la poudre produite à l'étape 3.B.

2.5 g de PLLA et 2.5 g de PDLA ont ensuite été introduits dans une minextrudeuse Haake Minilab équipée d'une double vis co-rotative. La température de la mini-extrudeuse est programmée à 190°C; la vitesse de rotation des vis est de 20 rpm. Aucune recirculation au sein de la mini-extrudeuse n'a été autorisée. A la sortie de l'extrudeuse, le jonc sort, est refroidi par l'air ambiant du laboratoire, récupéré et stocké dans un dessiccateur pour éviter toute hydrolyse.

Une caractérisation du polymère a été réalisée par DSC. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à -20°C/min de 240°C jusqu'à -20°C; maintien de l'échantillon à -20°C pendant 3 minutes et chauffage de -20°C jusqu'à 240°C à 20°C/min. Lors de cette analyse, si on ne considère le signal DSC au-dessus de 140°C, deux pics de fusion sont apparus lors du premier chauffage (l'un aux alentours de 177°C, l'autre de 203.5°C).

Lors du deuxième chauffage, il ne subsiste plus qu'un seul pic de fusion au-dessus de 140°C. Ce pic, caractérisé par une température de 196.3°C est aussi attribué à la présence de stéréocomplexe puisque la température de fusion est supérieure à celle des PLLA et PDLA purs de départ. Il y a clairement eu transformation du PLLA ou PDLA pur ayant conduit au pic de fusion d'environ 177°C présent lors du premier chauffage. Cette température de 196.3°C, étant plus élevée que celle des PLLA et PDLA pur, est interprétée comme la preuve de la formation d'un stéréocomplexe mais conduisant à une température de cristallisation bien inférieure à nos attentes du fait de la faible pureté du D-Lactide de départ.

### 3.D. Test de l'effet nucléant éventuel du stéréocomplexe de faible pureté.

0.75 g du stéréocomplexe formé à l'étape 3.C. et 4.25 g d'un PLLA commercialement disponible (Mn = 95 000 Dalton, Mw/Mn = 1.65, température de fusion lors d'une chauffe à 20°C/min = 170.3°C) ont été introduits dans une mini-extrudeuse Haake Minilab équipée d'une double vis co-rotative. La température de la mini-extrudeuse est programmée à 210°C; la vitesse de rotation des vis est de 40 rpm. Une recirculation du polymère est imposée à l'intérieur de la mini-extrudeuse pendant 3 minutes. Par la suite, le mélange sort de l'extrudeuse sous forme de jonc, est refroidi par l'air ambiant du laboratoire, récupéré et stocké dans un dessiccateur pour éviter toute hydrolyse.

Une analyse DSC a été réalisée avec ce mélange. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à - 20°C/min de 240°C jusqu'à -20°C; maintien de l'échantillon à -20°C pendant 3 minutes et chauffage de -20°C jusqu'à 240°C à 20°C/min. Lors de cette analyse, un pic de fusion à haute température (189.0°C lors du premier chauffage, 187.3°C lors du second chauffage) atteste de la présence effective du stéréocomplexe dans le mélange. Cependant, lors du refroidissement de l'échantillon, aucun phénomène endothermique n'est observé avant d'atteindre la transition vitreuse lors du refroidissement de l'échantillon. De plus, lors de la deuxième chauffe de l'échantillon, un phénomène endothermique important est observé entre 100°C et 140°C. Ces éléments sont des illustrations de l'absence d'effet nucléant de ce stéréocomplexe de faible pureté.

### Exemple 4 (non conforme à l'invention en terme de pureté optique et résidus catalytiques actifs)

### 4.A. Préparation du PLLA et du PDLA

Une partie des polymères décrits aux points 3.A. et 3.B. ont été traités de manière à désactiver le catalyseur via une extraction liquide-liquide. Cette désactivation a été réalisée en dissolvant le polymère dans du chloroforme à raison de 1 g de polymère dans 4 ml de chloroforme. Un volume équivalent de solution d'acide chlorhydrique 0.1 molaire a été ajoutée. Après agitation manuelle, le mélange des deux solutions a été laissé au repos. Après décantation, la phase aqueuse est éliminée. La phase organique restante est ensuite lavée deux fois avec de l'eau déminéralisée. Enfin, le polymère est précipité dans 10 volumes d'heptane, filtré et séché dans une étude sous vide à 40°C.

### 4.B. Préparation du stéréocomplexe

Le PLLA en poudre produit à l'étape 4.A a été introduit dans un "Mini-max Molder" (modèle CS-183 MMX de CSI, custom Scientific Instruments Inc) et chauffé à 190°C. Après deux minutes, le PLLA a été sorti de l'appareil sous forme de jonc.

Un jonc de PDLA a été produit de la même manière au départ de la poudre produite à l'étape 4.B.

2.5 g de PLLA et 2.5 g de PDLA ont ensuite été introduits dans une minextrudeuse Haake Minilab équippée d'une double vis co-rotative. La température de la mini-extrudeuse est programmée à 230°C; la vitesse de rotation des vis est de 40 rpm. Une recirculation au sein de la miniextrudeuse a été imposée durant 3 minutes. A la sortie de l'extrudeuse, le jonc sort, est refroidi par l'air ambiant du laboratoire, récupéré et stocké dans un dessiccateur pour éviter toute hydrolyse.

Teneur en résidu étain : 70 ppm.

Une caractérisation du polymère a été réalisée par DSC. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à -20°C/min de 240°C jusqu'à -20°C; maintien de l'échantillon à -20°C pendant 3 minutes et chauffage de -20°C jusqu'à 240°C à 20°C/min. Lors de cette analyse, si on ne considère le signal DSC au-dessus de 140°C, deux pics de fusion sont apparus lors du premier chauffage (179.5°C et 204.9°C). Lors du deuxième chauffage, deux pics de fusion subsistent au-dessus de 140°C, l'un à 179.0°C et l'autre à 202.9°C. sur base des enthalpies, on constate que, entre le premier et le deuxième chauffage, la proportion de stéréocomplexe (correspondant au pic à la plus haute température de fusion) a diminué par rapport à la proportion de PLLA et PDLA purs (identifiés par le pic de fusion aux environs de 180°C). Clairement, le traitement supplémentaire imposé (lavage à l'acide chlorhydrique puis deux fois avec de l'eau déminéralisée), induisant une désactivation des résidus catalytiques, a entraîné la suppression de l'évolution de deux pics de fusion vers un seul, correspondant au stéréocomplexe, lors du deuxième chauffage de l'analyse DSC.

### Exemple 5 (conforme à l'invention).

### 5.A. Préparation du PLLA

10 g de L,L-lactide et 1 ml d'une solution catalytique sont chauffés à 180°C pendant 30 minutes dans un réacteur de polymérisation agité à 1000 rpm (l'agitation est arrêtée lorsque la viscosité augmente). La solution catalytique a été préparée dans du toluène sec en ajoutant les quantités voulues de catalyseur, cocatalyseur et octanol-1 (voir ci-après). A la fin de la polymérisation, le produit obtenu est dissout dans 50 ml de chloroforme sous agitation à 500 rpm et précipité avec 300 ml d'éthanol. Le polymère est ensuite séché sous vide à 50°C durant 3 heures. Le taux de conversion est calculé au départ de la quantité de polymère sec et de la masse de lactide introduit.

Rapport molaire monomère/Sn(Oct)₂ : 5034

Rapport molaire monomère /octanol : 304

Rapport molaire Sn(Oct)₂/P(Ph)₃ : 1

L'expérience est réalisée deux fois de manière à disposer d'assez de PLLA.

Les masses moléculaires mesurées par GPC sont : Mₙ = 64 000 Dalton; M_{w} / Mₙ = 1.9.

Teneur en résidu étain : 111 ppm

### 5.B. Préparation du PDLA

La polymérisation décrite ci-dessus est réalisée deux fois avec du D,D-lactide au lieu du L,L-lactide de manière à produire le PDLA.

Rapport molaire monomère/Sn(Oct)₂ : 5026

Rapport molaire monomère /octanol : 304

Rapport molaire Sn(Oct)₂/P(Ph)₃ : 1

Les masses moléculaires mesurées par GPC sont : Mₙ = 36 000 Dalton; M_{w} / Mₙ = 1.2.

Teneur en résidu étain : 122 ppm

### 5.C. Préparation du stéréocomplexe

Le PLLA en poudre produit à l'étape 5.A a été introduit dans un "Mini-max Molder" (modèle CS-183 MMX de CSI) et chauffé à 190°C. Après deux minutes, le PLLA a été sorti de l'appareil sous forme de jonc.

Un jonc de PDLA a été produit de la même manière au départ de la poudre produite à l'étape 5.B.

2.5 g de PLLA et 2.5 g de PDLA ont ensuite été introduits dans une minextrudeuse Haake Minilab équipée d'une double vis co-rotative. La température de la mini-extrudeuse est programmée à 240°C; la vitesse de rotation des vis est de 20 rpm. Une recirculation au sein de la miniextrudeuse a été imposée durant 6 minutes. A la sortie de l'extrudeuse, le jonc sort, est refroidi par l'air ambiant du laboratoire, récupéré et stocké dans un dessiccateur pour éviter toute hydrolyse.

Les masses moléculaires mesurées par GPC sont : Mₙ = 30 000 Dalton; M_{w} / Mₙ = 1.5.

Teneur en résidu étain : 141 ppm

Une caractérisation du polymère a été réalisée par DSC. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à -20°C/min de 240°C jusqu'à -20°C; maintien de l'échantillon à -20°C pendant 3 minutes et chauffage de -20°C jusqu'à 240°C à 20°C/min. Lors de cette analyse, si on ne considère le signal DSC au-dessus de 140°C, deux pics de fusion sont apparus lors du premier chauffage (l'un à 167.2°C, l'autre de 228.9°C). Cette dernière température, étant plus élevée que celle des PLLA et PDLA pur, est interprétée comme la preuve de la formation d'un stéréocomplexe.

### Exemple 6 (non conforme à l'invention en terme de résidus catalytiques actifs)

### 6.A. Préparation du PLLA et du PDLA

Une partie des polymères décrits aux points 5.A. et 5.B. ont été traités de manière à désactiver le catalyseur via une extraction liquide-liquide. Cette désactivation a été réalisée en dissolvant le polymère dans du chloroforme à raison de 1 g de polymère dans 4 ml de chloroforme. Un volume équivalent de solution d'acide chlorhydrique 0.1 molaire a été ajoutée. Après agitation manuelle, le mélange des deux solutions a été laissé au repos. Après décantation, la phase aqueuse est éliminée. La phase organique restante est ensuite lavée deux fois avec de l'eau déminéralisée. Enfin, le polymère est précipité dans 10 volumes d'heptane, filtré et séché dans une étude sous vide à 40°C.

### 6.B. Préparation du stéréocomplexe

Le PLLA en poudre produit à l'étape 6.A a été introduit dans un "Mini-max Molder" (modèle CS-183 MMX de CSI) et chauffé à 190°C. Après deux minutes, le PLLA a été sorti de l'appareil sous forme de jonc.

Un jonc de PDLA a été produit de la même manière au départ de la poudre produite à l'étape 6.B.

2.5 g de PLLA et 2.5 g de PDLA ont ensuite été introduits dans une minextrudeuse Haake Minilab équippée d'une double vis co-rotative. La température de la mini-extrudeuse est programmée à 230°C; la vitesse de rotation des vis est de 40 rpm. Une recirculation au sein de la miniextrudeuse a été imposée durant 6 minutes. A la sortie de l'extrudeuse, le jonc sort, est refroidi par l'air ambiant du laboratoire, récupéré et stocké dans un dessiccateur pour éviter toute hydrolyse.

Teneur en résidu étain : 88 ppm. L'étain est dans cet exemple sous forme non active.

Une caractérisation du polymère a été réalisée par DSC. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à -20°C/min de 240°C jusqu'à -20°C; maintien de l'échantillon à -20°C pendant 3 minutes et chauffage de -20°C jusqu'à 240°C à 20°C/min. Lors de l'étape de refroidissement imposée lors de cette analyse, contrairement au cas de l'exemple 5 où un important pic de cristallisation est observé entre 210°C et 170°C (maximum du pic à 192.4°C, enthalpie de -75.8 J/g), aucune cristallisation n'est observée avant 190°C. Clairement, le traitement supplémentaire imposé (lavage à l'acide chlorhydrique puis deux fois avec de l'eau déminéralisée), induisant une désactivation des résidus catalytiques, entraîne une cristallisation moins aisée du stéréocomplexe.

### Exemple 7 (conforme à l'invention).

### 7.A. Préparation du PLLA

La polymérisation décrite dans l'exemple 5 a été reproduite avec
Rapport molaire monomère/Sn(Oct)₂ : 2008
Rapport molaire monomère /octanol : 304
Rapport molaire Sn(Oct)₂/P(Ph)₃ : 1

L'expérience est réalisée deux fois de manière à disposer d'assez de PLLA.

Les masses moléculaires mesurées par GPC sont : Mₙ = 57 000 Dalton; M_{w} / Mₙ = 1.8.
Teneur en résidu étain : 362 ppm

### 7.B. Préparation du PDLA

La polymérisation décrite ci-dessus est réalisée deux fois avec du D,D-lactide au lieu du L,L-lactide de manière à produire le PDLA.
Rapport molaire monomère/Sn(Oct)₂ : 2027
Rapport molaire monomère /octanol : 306
Rapport molaire Sn(Oct)₂/P(Ph)₃ : 1

Les masses moléculaires mesurées par GPC sont : Mₙ = 39 000 Dalton; M_{w} / Mₙ = 1.6.
Teneur en résidu étain : 312 ppm

### 7.C. Préparation du stéréocomplexe

Le PLLA en poudre produit à l'étape 7.A a été introduit dans un "Mini-max Molder" (modèle CS-183 MMX de CSI, custom Scientific Instruments Inc) et chauffé à 190°C. Après deux minutes, le PLLA a été sorti de l'appareil sous forme de jonc.

Un jonc de PDLA a été produit de la même manière au départ de la poudre produite à l'étape 7.B.

2.5 g de PLLA et 2.5 g de PDLA ont ensuite été introduits dans une minextrudeuse Haake Minilab équipée d'une double vis co-rotative. La température de la mini-extrudeuse est programmée à 240°C; la vitesse de rotation des vis est de 20 rpm. Une recirculation au sein de la miniextrudeuse a été imposée durant 6 minutes. A la sortie de l'extrudeuse, le jonc sort, est refroidi par l'air ambiant du laboratoire, récupéré et stocké dans un dessiccateur pour éviter toute hydrolyse.

Les masses moléculaires mesurées par GPC sont : Mₙ = 22 000 Dalton; M_{w} / Mₙ = 1.5
Teneur en résidu étain : 240 ppm

Une caractérisation du polymère a été réalisée par DSC. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à -20°C/min de 240°C jusqu'à -20°C; maintien de l'échantillon à -20°C pendant 3 minutes et chauffage de -20°C jusqu'à 240°C à 20°C/min. Lors de cette analyse, si on ne considère le signal DSC au-dessus de 140°C, un seul pic est apparu lors du premier chauffage (223.4°C) ainsi que lors du second chauffage (207.9°C).

On voit l'intérêt d'avoir une teneur plus élevée en résidus catalytique actif en comparant les exemples 5 et 7. Dans ce dernier cas, il n'existe qu'un seul pic de fusion au-dessus de 150°C, et ce, même lors du premier chauffage réalisé par DSC.

### Exemple 8 (conforme à l'invention).

### 8.A. Préparation du PLLA

La polymérisation décrite dans l'exemple 5 (mais sans cocatalyseur) a été reproduite avec Rapport molaire monomère/Ti(OiPr)₄ : 5131
Rapport molaire monomère /octanol : 306

L'expérience est réalisée deux fois de manière à disposer d'assez de PLLA.

Les masses moléculaires mesurées par GPC sont : Mₙ = 54 000 Dalton; M_{w} / Mₙ = 1.6.
Teneur en résidu titane : 60 ppm

### 8.B. Préparation du PDLA

La polymérisation décrite ci-dessus est réalisée deux fois avec du D,D-lactide au lieu du L,L-lactide de manière à produire le PDLA.
Rapport molaire monomère/Ti(OiPr)₄ : 5121
Rapport molaire monomère /octanol : 306

### 8C. Préparation du stéréocomplexe

Le PLLA en poudre produit à l'étape 8.A a été introduit dans un "Mini-max Molder" (modèle CS-183 MMX de CSI) et chauffé à 190°C. Après deux minutes, le PLLA a été sorti de l'appareil sous forme de jonc.

Un jonc de PDLA a été produit de la même manière au départ de la poudre produite à l'étape 8.B.

2.5 g de PLLA et 2.5 g de PDLA ont ensuite été introduits dans une minextrudeuse Haake Minilab équipée d'une double vis co-rotative. La température de la mini-extrudeuse est programmée à 240°C; la vitesse de rotation des vis est de 20 rpm. Une recirculation au sein de la miniextrudeuse a été imposée durant 6 minutes. A la sortie de l'extrudeuse, le jonc sort, est refroidi par l'air ambiant du laboratoire, récupéré et stocké dans un dessiccateur pour éviter toute hydrolyse.

Les masses moléculaires mesurées par GPC sont : Mₙ = 37 000 Dalton; M_{w} / Mₙ = 1.5.
Teneur en résidu titane : 68 ppm

Une caractérisation du polymère a été réalisée par DSC. L'histoire thermique imposée est : maintien de l'échantillon à 20°C pendant 4 minutes; chauffage de 20°C jusqu'à 240°C à 20°C/min; maintien de la température à 240°C pendant 4 min; refroidissement à -20°C/min de 240°C jusqu'à -20°C; maintien de l'échantillon à -20°C pendant 3 minutes et chauffage de -20°C jusqu'à 240°C à 20°C/min. Lors de cette analyse, si on ne considère que le signal DSC au-dessus de 140°C, un seul pic est apparu lors du premier chauffage (220.9°C) ainsi que lors du second chauffage (219.0°C).

### Exemple 9 (conforme à l'invention).

Dans cet exemple, un agent de désactivation du système catalytique a été introduit après avoir mélangé le PLLA et le PDLA.

A cet effet, le stéréocomplexe a été préparé au départ du PLLA et du PDLA tel que mentionné dans l'exemple 1.

Pour la préparation du stéréocomplexe, 2.5 g de PLLA et 2.5 g de PDLA ont été introduits dans une minextrudeuse Haake Minilab équipée d'une double vis co-rotative. La température de la mini-extrudeuse est programmée à 240°C; la vitesse de rotation des vis est de 20 rpm. Une recirculation au sein de la miniextrudeuse a été imposée durant 6 minutes. A la cinquième minute, quatre granulés (125mg) d'un masterbatch contenant 10% d'Irganox MD1024 dans du PLLA ont été ajouté dans la miniextrudeuse A la sortie de l'extrudeuse, le jonc sort, est refroidi par l'air ambiant du laboratoire, récupéré et stocké dans un dessiccateur pour éviter toute hydrolyse.

La caractérisation du polymère réalisée par DSC a permis d'identifier un pic de fusion à 227,5 °C, interprétée comme la preuve de la formation d'un stéréocomplexe.

## Revendications

1. Procédé de production d'un polymère stéréocomplexe 40-60/60-40 PLLA/PDLA, d'une masse molaire moyenne en nombre d'au moins 15.000 Dalton, **caractérisé en ce qu'**il comprend les étapes qui consistent à :
a) Polymériser en masse le L-L lactide de pureté optique d'au moins 98 %, de préférence d'au moins 99,5 %, encore plus préférentiellement d'au moins 99.8 % pour former le PLLA substantiellement exempt d'insertion de lactide de configuration D ayant une masse moléculaire moyenne en nombre (Mn) supérieure à 70.000 Dalton;
b) Polymériser en masse le D-D lactide de pureté optique d'au moins 98 %, de préférence d'au moins 99,5 %, encore plus préférentiellement d'au moins 99.8 % pour former le PDLA substantiellement exempt d'insertion de lactide de configuration L ayant une masse moléculaire moyenne en nombre (Mn) supérieure à 70.000 Dalton;
c) Mélanger, en l'absence de solvant du PLLA et du PDLA obtenus aux étapes a) et b) dans des proportions 40-60/60-40, en présence du système catalytique initial utilisé aux étapes a) et b) et, optionnellement, en présence du L-lactide et du D-lactide non converti, à une température supérieure à la température de fusion du polylactide, sans dépasser 250°C ;
d) Optionnellement démonomériser le polymère stéréocomplexe PLLA/PDLA obtenu
e) Granuler et récupérer le polymère stéréocomplexe PLLA/PDLA de masse molaire moyenne en nombre > 15.000 Dalton et de préférence > 80.000 Dalton, obtenu.

2. Procédé selon la revendication 1 **caractérisé en ce qu'**après l'étape c) on introduit un agent de désactivation du système catalytique.

3. Procédé selon les revendications 1 à 2, **caractérisé en ce que** l'on conduit la polymérisation du L-lactide ou du D-lactide, en masse, à une température comprise entre 170 et 200°C, de préférence entre 175 et 185 °C, pendant une durée comprise entre 5 et 75 minutes, de préférence entre 10 et 45 minutes, en présence d'un système catalytique comprenant un catalyseur, un initiateur et optionnellement un co-catalyseur.

4. Procédé selon la revendication 3, **caractérisé en ce que** le système catalytique comprend (i) un catalyseur de formule générale M (X1,X2,..Xm) où M représente un métal choisi dans les éléments des colonnes 3 à 12 du Tableau Périodique et X1,X2,Xm sont des substituants choisis parmi les groupes alkyles, aryles, oxyde, alcoxy ; (ii) un initiateur choisi parmi les alcools et les amines ; (iii) et optionnellement un co-catalyseur de formule générale Y(R1,R2,R3...Rn) et comprenant de préférence la triphénylphosphine.

5. Procédé selon les revendications 1 à 4, **caractérisé en ce que** l'on mélange le PLLA et le PDLA obtenus aux étapes a) et b) en proportion 45-55/55-45 et de préférence 50/50.

6. Procédé selon les revendications 1 à 5, **caractérisé en ce que** l'on effectue le mélange de l'étape c) à une température supérieure à 225°C et ne dépassant pas de préférence 245°C.

7. Procédé selon les revendications 1 à 6, **caractérisé en ce que** l'on conduit les étapes c) à e) du procédé en continu.

8. Procédé de préparation d'un stéréocomplexe ayant une température de fusion unique supérieure à 210°C et de préférence supérieure à 220°C **caractérisé en ce qu'**il est obtenu par un procédé décrit dans l'une quelconque des revendications 1 à 7.

9. Utilisation d'un stéréocomplexe obtenu selon le procédé décrit dans l'une quelconque des revendications 1 à 8, soit seul soit en mélange, dans des applications films, fibres ou moulage par injection.

## Patentansprüche

1. Verfahren zur Herstellung eines 40-60/60-40 PLLA/PDLA-Stereokomplex-Polymers mit einer zahlenmäßig durchschnittlichen molaren Masse von mindestens 15.000 Dalton, **dadurch gekennzeichnet, dass** es die folgenden Schritte umfasst, die bestehen im:
a) Massepolymerisieren des L-L Lactids mit einer optischen Reinheit von mindestens 98 %, vorzugsweise von mindestens 99,5 %, in noch bevorzugterer Weise von mindestens 99,8 %, zur Bildung des substantiell von Einschluss von Lactid mit D-Konfiguration freien PLLA mit einer zahlenmäßig durchschnittlichen molekularen Masse (Mn) über 70.000 Dalton,
b) Massenpolymerisieren des D-D Lactids mit einer optischen Reinheit von mindestens 98 %, vorzugsweise von mindestens 99,5 %, in noch bevorzugterer Weise von mindestens 99,8 %, zur Bildung des substantiell von Einschluss von Lactid mit L-Konfiguration freien PDLA mit einer zahlenmäßig durchschnittlichen molekularen Masse (Mn) über 70.000 Dalton,
c) Mischen, bei Abwesenheit von Lösungsmittel, des in den Schritten a) und b) in Verhältnissen 40-60/60-40 gewonnenen PLLA und PDLA in Anwesenheit des anfänglichen katalytischen Initialsystems, das in den Schritten a) und b) verwendet wurde, und, optional, in Anwesenheit des L-Lactids und des nicht umgewandelten D-Lactids, bei einer Temperatur über der Fusionstemperatur des Polylactids, ohne 250 °C zu überschreiten,
d) optional, Demonomerisieren des gewonnenen PLLA/PDLA Stereokomplex-Polymers,
e) Granulieren und Rückgewinnen des gewonnene PLLA/PDLA Stereokomplex-Polymers mit einer zahlenmäßig durchschnittlichen molaren Masse von > 15.000 Dalton und vorzugsweise von > 80.000 Dalton.

2. Verfahren nach Anspruch 1, **dadurch gekennzeichnet, dass** nach dem Schritt c) on ein Deaktivierungsmittel des katalytischen Systems eingeführt wird.

3. Verfahren nach den Ansprüchen 1 bis 2, **dadurch gekennzeichnet, dass** die Massenpolymerisation des L-Lactids oder des D-Lactids bei einer Temperatur zwischen 170 und 200 °C, vorzugsweise zwischen 175 und 185 °C, inklusive während einer Dauer zwischen 5 und 75 Minuten, vorzugsweise zwischen 10 und 45 Minuten, inklusive in Anwesenheit eines katalytischen Systems durchgeführt wird, das einen Katalysator, einen Initiator und optional einen Co-Katalysator umfasst.

4. Verfahren nach Anspruch 3, **dadurch gekennzeichnet, dass** das katalytische System (i) einen Katalysator der allgemeinen Formel M (X1,X2,..Xm), wobei M ein Metall, ausgewählt aus den Elementen der Spalten 3 bis 12 des Periodensystems, darstellt und X1, X2, Xm Substituenten, ausgewählt aus den Alkyl-, Aryl-, Oxid-, Alcoxy-Gruppen, sind, (ii) einen Initiator, ausgewählt aus den Alkoholen und den Aminen, und (iii) optional einen Co-Katalysator der allgemeinen Formel Y(R1,R2,R3...Rn) umfasst und vorzugsweise das Triphenylphosphin umfasst.

5. Verfahren nach den Ansprüchen 1 bis 4, **dadurch gekennzeichnet, dass** das in den Schritten a) und b) gewonnene PLLA und PDLA im Verhältnis 45-55/55-45 und vorzugsweise 50/50 gemischt wird.

6. Verfahren nach den Ansprüchen 1 bis 5, **dadurch gekennzeichnet, dass** das Mischen von Schritt c) bei einer Temperatur über 225 °C, die vorzugsweise 245 °C nicht übersteigt, durchgeführt wird.

7. Verfahren nach den Ansprüchen 1 bis 6, **dadurch gekennzeichnet, dass** die Schritte c) bis e) des Verfahrens kontinuierlich durchgeführt werden.

8. Verfahren zur Herstellung eines Stereokomplexes, der eine einzige Fusionstemperatur über 210 °C und vorzugsweise über 220 °C hat, **dadurch gekennzeichnet, dass** er durch ein Verfahren nach einem der Ansprüche 1 bis 7 gewonnen wird.

9. Verwendung eines Stereokomplexes nach einem Verfahren nach einem der Ansprüche 1 bis 8 entweder allein oder gemischt in Folien-, Faser- oder Spritzformanwendungen.

## Claims

1. A method for producing a PLLA/PDLA 40-60:60-40 polymer stereocomplex having a number average molecular weight of at least 15 000 Daltons, **characterized in that** it comprises the steps of:
a) Bulk polymerizing the L-L lactide having optical purity of at least 98 %, preferably at least 99.5 %, more preferably at least 99.8 % to form the PLLA substantially free of insertion of lactide of D configuration, having a number average molecular weight (Mn) higher than 70 000 Daltons;
b) Bulk polymerizing the D-D lactide having optical purity of at least 98 %, preferably at least 99.5 %, more preferably at least 99.8 % to form the PDLA substantially free of insertion of lactide of L configuration, having a number average molecular weight (Mn) higher than 70 000 Daltons;
c) Mixing, in the absence of solvent, the PLLA and PDLA obtained at steps a) and b) in proportions of 40-60:60-40 in the presence of the initial catalytic system used at steps a) and b) and optionally in the presence of the non-converted L-lactide and D-lactide, at a temperature higher than the melt temperature of the polylactide, without exceeding 250°C;
d) Optionally, demonomerizing the PLLA/PDLA polymer stereocomplex obtained;
e) Granulating and recovering the PLLA/PDLA polymer stereocomplex obtained having a number average molecular weight > 15 000 Daltons and preferably > 80 000 Daltons.

2. The method according to claim 1, **characterized in that** after step c) a deactivation agent of the catalytic system is added.

3. The method according to claims 1 and 2, **characterized in that** the bulk polymerization of the L-lactide and D-lactide is conducted at a temperature between 170 and 200°C, preferably between 175 and 185°C for a time of between 5 and 75 minutes, preferably between 10 and 45 minutes, in the presence of a catalytic system comprising a catalyst, an initiator and optionally a co-catalyst.

4. The method according to claim 3, **characterized in that** the catalytic system comprises (i) a catalyst of general formula M (X1,X2,...Xm) where M is a metal selected from among elements in columns 3 to 12 of the Periodic Table and X1, X2, Xm are substituents selected from among alkyl, aryl, oxide, alkoxy groups; (ii) an initiator selected from among alcohols and amines; (iii) and optionally a co-catalyst of general formula Y(R1,R2,R3...Rn) and preferably comprising triphenylphosphine.

5. The method according to claims 1 to 4, **characterized in that** the PLLA and PDLA obtained at steps a) and b) are mixed in a proportion of 45-55:55-45 preferably 50:50.

6. The method according to claims 1 to 5, **characterized in that** the mixing at step c) is conducted at a temperature higher than 225°C and preferably not exceeding 245°C.

7. The method according to claims 1 to 6, **characterized in that** steps c) to e) of the method are conducted by continuous processing.

8. A method for preparing a stereocomplex having a single melting temperature higher than 210°C and preferably higher than 220°C, **characterized in that** it is obtained using a method described in any of claims 1 to 7.

9. The use of a stereocomplex obtained according to the method described in any of claims 1 to 8, either alone or in a mixture for film, fibre or injection moulding applications.
